# EUROPÄISCHE PATENTSCHRIFT

(11) **EP 3 500 389 B1**
(45) Veröffentlichungstag und Bekanntmachung des Hinweises auf die Patenterteilung: **21.06.2023**
(21) Anmeldenummer: 17777769.5
(22) Anmeldetag: 17.08.2017
(51) Int. Cl.: B23K 11/00, B23K 11/02, B23K 11/04, B23K 26/24, B23K 33/00, F16L 11/10, F16L 11/24, B23K 26/242, B23K 101/04, B23K 101/16, B23K 103/04

(54) **VERFAHREN ZUM VERSCHWEISSEN KALTGEWALZTER SCHMALBÄNDER IN FORM VON FLACHDRAHT ODER PROFILEN AUS EINEM TWIP-STAHL SOWIE EIN GESCHWEISSTES KALTGEWALZTES SCHMALBAND AUS EINEM TWIP-STAHL**
METHOD OF WELDING A COLD-ROLLED NARROW STRIP IN THE FORM OF FLAT WIRE OR PROFILED ELEMENT MADE OF A TWIP STEEL FOR USE IN FLEXIBLE PIPES AND A WELDED COLD-ROLLED NARROW STRIP
PROCÉDÉ DE SOUDURE D'UNE BANDE ÉTROITE LAMINÉE À FROID SOUS LA FORME D'UN FIL PLAT OU D'UN ÉLÉMENT PROFILÉ EN ACIER TWIP UTILISABLE DANS DES TUYAUX FLEXIBLES ET BANDE LAMINÉE À FROID SOUDÉE

(30) Priorität: 18.08.2016 DE 102016010172
(43) Veröffentlichungstag der Anmeldung: 26.06.2019
(73) Patentinhaber: C.D. Wälzholz GmbH, 58093 Hagen (DE)
(72) Erfinder: BRACHTHÄUSER, Norbert, 44869 Bochum (DE)
(74) Vertreter: Schneider, Uwe
(86) Internationale Anmeldenummer: PCT/DE2017/000260
(87) Internationale Veröffentlichungsnummer: WO 2018/033169

(56) Entgegenhaltungen:
- DE-A1- 4 236 171
- DE-A1- 10 125 830
- DE-A1-102013 012 118
- DE-A1-102013 101 276

## Beschreibung

Die Erfindung betrifft ein Verfahren zur Herstellung flexibler Rohre mittels Verschweißen kaltgewalzter Schmalbänder in Form von Flachdraht oder Profilen aus einem TWIP-Stahl gemäß Anspruch 1 sowie flexibles Rohr aus kaltgewalztem Schmalband in Form von Flachdraht oder Profilen aus einem TWIP-Stahl, insbesondere für Offshore-Anwendungen gemäß Anspruch 9.

Sogenannte TWIP-Stähle (Twinning Induced Plasticity = durch Zwillingsbildung induzierte Plastizität) sind austenitische Stähle, die durch Kaltverformung sehr hohe Festigkeiten erlangen und dabei noch ausreichende Zähigkeiten aufweisen. Diese Eigenschaften der TWIP-Stähle basieren auf Eisen-Mangan-Legierungen, beinhalten hohe Mangan-Gehalte Mn von über 15% und weitere Legierungselemente wie Silizium Si, Aluminium Al und Chrom Cr. Ebenso besitzen diese Legierungen, insbesondere wenn sie mit Aluminium Al legiert sind, eine gute Beständigkeit gegen Wasserstoff-induzierte Spannungsrisskorrosion. Hierdurch ist ein Einsatz in sauren Medien möglich und vorteilhaft gegenüber anderen hochfesten Stahl-Legierungen.

TWIP-Stähle mit hohen Mangan-Gehalten größer als 15% besitzen ein stabiles austenitisches Gefüge. Selbst bei einer starken Kaltverformung bleibt das Gefüge stabil austenitisch, es erfolgt im Gegensatz zu ferritischen Stählen keine Gefügeumwandlung. Austenitische Stähle verfestigen bekanntlich deutlich stärker als ferritische Stähle. Die Verfestigung erkennt man im Gefüge durch eine Zwillingsbildung. Das stabile austenitische, kaltverfestigte Gefüge reagiert bei einer Wärmebehandlung im Bereich der Rekristallisationstemperatur mit einer Korn-Neubildung, was mit einer deutlichen Entfestigung einhergeht. Eine schnelle Abkühlung nach der Wärmebehandlung, wie sie beim Schweißen passiert, ändert das rekristallierte, entfestigte Gefüge aber nicht mehr. So entsteht nach dem Schmelzschweißen in der Schweißnaht ein austenitisches Gefüge, welches dem des nichtverfestigten Zustandes entspricht.

Durch das Schweißen von kaltverformten TWIP-Stählen kommt es somit zur Entfestigung des Stahls in der Schweißnaht, wobei der Grad der Entfestigung eine Abhängigkeit vom Schweißverfahren zeigt. Nach einer Kaltumformung auf eine Zugfestigkeit von ca. Rₘ= 1500 MPa wird ein TWIP-Stahl nach dem Schmelzschweißen auf eine Festigkeit in der Größenordnung von Rₘ = 700 - 900 MPa und damit in die Nähe der nicht kaltverformten Ausgangsfestigkeit entfestigt. Das Material wird also auf ein Niveau von 45 - 60 % der Ausgangsfestigkeit entfestigt.

Bei einer Anwendung, die das hohe Festigkeitspotential eines kaltverfestigten TWIP-Stahles vollständig nutzen will, die aber eine Schmelzschweißung erfordert, muss bei allen Schmelzschweißverfahren mit einem deutlichen Abfall der Zugfestigkeit und der Bruchdehnung in der Schweißnaht gerechnet werden. Die Schweißnaht bedeutet also eine Schwachstelle in der Konstruktion, was in der Regel nicht akzeptabel ist und die Vorteile des hoch verfestigten TWIP-Stahles deutlich mindert.

Derartige TWIP-Stähle werden auch zur Herstellung flexibler Rohre für verschiedene Anwendungen genutzt. Flexible Rohre werden dabei in vielen Bereichen der Technik für die verschiedensten Zwecke verwendet und haben vorwiegend die Aufgabe, fluide Medien wie Wasser, Öl, Gas oder dgl. zu leiten und gegenüber der Umwelt abzuschirmen. Hierbei unterliegen derartige flexible Rohre verschiedensten Einflüssen, einmal Einflüssen aus der mechanischen Belastung aufgrund des Einsatzbereiches und der Einsatzumgebung und zum anderen Einflüssen aufgrund der physikalischen Eigenschaften und chemischen Zusammensetzung der zu leitenden Fluide.

Ein wichtiger und technisch sehr anspruchsvoller Einsatzbereich für derartige flexible Rohre sind die so genannten Offshore-Anwendungen, bei denen die flexiblen Rohre für den Einsatz im Meer verwendet werden. Hierbei werden die flexiblen Rohre zur Leitung von Flüssigkeiten wie Öl oder Gasen verwendet, die beispielsweise vom Meeresboden an die Meeresoberfläche gebracht werden sollen. Der Transport derartiger Flüssigkeiten oder Gase erfolgt dabei über große Strecken, so dass die flexiblen Rohre auch entsprechende Längen aufweisen und demgemäß hohen Belastungen sowohl aufgrund ihres Eigengewichtes als auch aufgrund der aus der Umgebung einwirkenden Kräften unterliegen.

Derartige flexible Rohre weisen üblicherweise einen inneren, das zu transportierende Medium aufnehmenden rohrartigen und flexiblen Kern auf, der das zu transportierende Medium leitet und dicht gegenüber der Umgebung abschottet. Dieser flexible Kern wird üblicherweise aus polymeren Materialien hergestellt. Der flexible Kern wird umgeben von einer oder mehreren Armierungsschichten üblicherweise aus Stahlwerkstoffen, wobei aufgrund der notwendigen Flexibilität die Stahlwerkstoffe in Form von gewickelten Stahldrähten oder Stahlbändern auf den flexiblen Kern aufgebracht werden. Der flexible Kern und die eine oder mehrere Armierungsschichten sind dabei relativ zueinander nicht aneinander befestigt, sondern können sich in geringem Maße gegeneinander verschieben, wodurch die Flexibilität und Biegsamkeit der flexiblen Rohre verbessert wird. Die Armierungsschichten umgeben dabei den flexiblen Kern und schützen diesen einerseits gegen Belastungen aus der Umwelt und verstärken das flexible Rohr gegenüber Belastungen beim Transport, bei der Verlegung und beim Betrieb derartiger flexibler Rohre.

Die Armierungsschichten werden aus Stahldrähten oder Stahlbändern hergestellt, die bei der Herstellung des flexiblen Rohres schraubenförmig um den flexiblen Kern herum gewickelt werden. Es können auch Armierungsschichten unterschiedlicher Aufgaben an einem derartigen flexiblen Rohr vorgesehen werden, etwa als reine Verstärkungslage aus nebeneinander liegenden Flachbändern oder als sog. Formschlussprofil, bei dem die nebeneinander gewickelten Schmalbänder profiliert sind und sich mechanisch aneinander über Formschluss verankern und dadurch einen stabileren Verbund als die einfachen Verstärkungsbänder bilden. Hierzu müssen die zu verarbeitenden Schmalbänder vorab entsprechend profiliert werden.

Die flexiblen Rohre werden üblicherweise aus einzelnen Stücken hergestellt, da sie häufig größere Längen erfordern, als herstellungstechnisch aus einem Vormaterial gefertigt werden kann. Daher müssen die Armierungsschichten der jeweiligen Teilstücke miteinander dauerhaft und hoch belastbar verschweißt werden können, so dass die verwendeten Stähle für die Armierungsschichten eine gute Schweißbarkeit aufweisen müssen.

Nach der DE 10 2013 012 118 A1 bieten TWIP-Stähle in der Anwendung als Armierungsmaterial für derartige flexible Rohre einen besonderen Vorteil, da diese gleichzeitig hochfest, duktil und gut beständig gegen Wasserstoff-induzierte Spannungsrisskorrosion sind. Durch die Vielzahl der Schweißnähte in flexiblen Rohren sind die mechanischen Eigenschaften der Schweißverbindung von besonderer Bedeutung. Während in ferritischen Kohlenstoff-Stählen in der Stumpfschweißnaht ein Zugfestigkeits-Niveau von mehr als 80% der Basiswerkstoff-Festigkeit bei noch ausreichender Duktilität erreicht wird, ist in TWIP-Stählen bei normalem Stumpfschweißen ein Zugfestigkeitsabfall auf bis zu 40 % des Basismaterials zu verzeichnen. Zum Verschweißen werden die zu verbindenden Enden der Stahlbänder üblicherweise senkrecht zur Längserstreckung der Stahlbänder planparallel abgelängt und diese Enden stumpf stoßend voreinander angeordnet und anschließend verschweißt. Derartige Verschweißungen senken jedoch die Gesamt-Belastbarkeit des hauptsächlich einachsig belasteten Armierungsmaterials signifikant ab und erlauben es daher nicht, die gefügebasierten Vorteile der TWIP-Stähle in diesem Anwendungsbereich voll auszunutzen. Der Fachmann ist daher bei derartigen Schweißverbindungen üblicherweise bestrebt, die Länge der Schweißnaht möglichst kurz zu halten, um die Flexibilität der zu verschweißenden Stahlbänder nicht zu beeinträchtigen und den Aufwand für die Vorbereitung der Schweißnähte gering zu halten. Eine alternativ denkbare Verbreiterung der zu verschweißenden Stahlbänder zur Erhöhung der Gesamt-Belastbarkeit des Armierungsmaterials beeinträchtigt hingegen deren Flexibilität und erschwert damit die Herstellung möglichst flexibler Rohre.

Aufgabe der vorliegenden Erfindung ist es daher, zur Herstellung flexibler Rohre Schmalbänder in Form von Flachdraht oder Profilen aus einem TWIP-Stahl derart miteinander zu verschweißen, dass die Verringerung der Zugfestigkeit des Flachdrahtes oder Schmalbandes in der Schweißnaht wesentlich geringer als bei bekannten Verschweißungen derartiger Materialien ausfällt.

Die Lösung der erfindungsgemäßen Aufgabe ergibt sich hinsichtlich des Verfahrens aus den kennzeichnenden Merkmalen des Anspruches 1 und hinsichtlich des flexiblen Rohres aus den kennzeichnenden Merkmalen des Anspruches 9 jeweils in Zusammenwirken mit den Merkmalen des zugehörigen Oberbegriffes. Weitere vorteilhafte Ausgestaltungen der Erfindung ergeben sich aus den Unteransprüchen.

Die Erfindung hinsichtlich des Verfahrens geht aus von einem Verfahren zur Herstellung flexibler Rohre mittels Verschweißen kaltgewalzter Schmalbänder in Form von Flachdraht oder Profilen aus einem TWIP-Stahl, insbesondere von flexiblen Rohren für Offshore-Anwendungen. Ein derartiges Verfahren wird dadurch in erfindungsgemäßer Weise weiter entwickelt, dass die Enden der zu verschweißenden Abschnitte des Schmalbandes relativ zur Hauptbelastungsrichtung des Schmalbandes abgeschrägt ausgebildet und zueinander passend angeordnet werden und die Schweißnaht durch ein Schmelzschweißverfahren mit einer relativ kleinen Aufschmelzzone und/oder einer relativ geringen Schweißtemperatur ausgeführt wird. Gegenstand der Erfindung ist es, durch eine spezielle Nahtvorbereitung und möglichst "kaltes Schweißen", also einer geringen Wärmeeinbringung, die Entfestigung der Schweißnaht so zu begrenzen, dass Streckgrenze und Zugfestigkeit im Bereich der Schweißnaht auf ein deutlich höheres Niveau angehoben werden. Hierzu werden zwei Ansatzpunkte für die Beeinflussung der Festigkeit der Schweißnaht ausgenutzt. Zum einen wird ein Schmelzschweißen mit einer möglichst geringen Aufschmelzzone sowie einer möglichst geringen Temperatur genutzt. Eine kleine Aufschmelzzone entsteht etwa beim Laserschweißen durch die sehr punktuelle Wärmeeinbringung durch den Laserstrahl. Eine geringe Temperatur lässt sich beispielsweise erreichen, in dem z.B. beim alternativ denkbaren Widerstandsstumpfschweißen eine geringe Schweißstromstärke gewählt wird und damit eine geringe Wärmeeinbringung hervorruft. Dabei ist die Nennung der beiden Schweißverfahren Laserschweißen und Widerstandsstumpfschweißen nur als Nennung besonders vorteilhafter Schweißverfahren anzusehen, selbstverständlich sind auch alle anderen bekannten Schweißverfahren denkbar und anwendbar, so sie denn die Kriterien einer relativ kleinen Aufschmelzzone und/oder einer relativ geringen Schweißtemperatur erfüllen. Die Begriffsdefinition "relativ kleine" Aufschmelzzone und "relativ geringe" Schweißtemperatur sind hierbei nicht als absolute Größenangaben zu bewerten, sondern sollen die Ausbildung der Aufschmelzzone bzw. die Höhe der Schweißtemperatur relativ zu anderen bekannten Schweißverfahren angeben. So sind diese Einflussgrößen zum einen abhängig vom gewählten Schweißverfahren, gleichzeitig können sie aber bei einem gewählten Schweißverfahren stark abhängig von den jeweiligen Schweißparametern sein. Der Fachmann kann anhand der Angaben zu den beiden Kriterien einer relativ kleinen Aufschmelzzone und/oder einer relativ geringen Schweißtemperatur dann selbst bestimmen, welches Schweißverfahren und welche Verfahrensparameter im Sinne der Minimierung der Entfestigung der Schweißnaht jeweils optimal sind und den Schweißprozess entsprechend gestalten.

Dieser Ansatzpunkt allein ermöglicht jedoch nur moderat erhöhte Zugfestigkeiten und Bruchdehnungen gegenüber einem Standard-Schweißvorgang. Hiermit allein lässt sich der Zugfestigkeitsabfall in der Schweißnaht nur auf ein Niveau von bestenfalls 65 - 70 % der kaltverfestigten Ausgangs-Zugfestigkeit begrenzen. Deshalb wird erfindungsgemäß zusätzlich das Schmelzschweißen mit einer so veränderten Nahtvorbereitung ausgeführt, dass die Breite der Wärmeeinflusszone aufgrund der Lage der Schweißnaht quer zur Beanspruchungsrichtung deutlich reduziert wird. Hierzu werden erfindungsgemäß die zu verbindenden Enden mit einer vorzugsweise planparallelen Fläche und vorzugsweise in Schräglage von 30° bis 75° zur Bandachse vorbereitet und diese dann mit der wie vorstehend beschrieben lokalen und minimierten Wärmeeinbringung geschweißt. Bei einachsiger Beanspruchung der Schweißverbindung, also parallel zur Bandachse (etwa im Falle zweier zu verbindender Bänder) wird die Schweißverbindung durch die Wärmeeinflusszone nur zu einem Flächenanteil von 30 - 75% geschwächt. Der Nachweis zur Wirksamkeit des Verfahrens kann durch den einachsigen Zugversuch erbracht werden. Das erfindungsgemäße Schweiß-Verfahren kann besonders vorteilhaft angewendet werden, wenn hochverfestigte TWIP-Stahl-Legierungen zu Konstruktionen mit Schweißnähten verarbeitet werden, in denen die Schweißnähte gleichen Belastungen ausgesetzt sind wie das Basismaterial. Die Schweißverbindungen werden deutlich geringer geschwächt als normal stumpf geschweißte Verbindungen. So können die Vorteile der hochverfestigten TWIP-Stahllegierungen mit diesem neuen Verfahren auch in Schweißkonstruktionen und insbesondere für Armierungsbänder von flexiblen Rohren genutzt werden.

Von besonderem Vorteil ist es, wenn die schrägen Enden der zu verschweißenden Abschnitte des Schmalbandes und damit die Lage der Schweißnaht relativ zur Hauptbelastungsrichtung des Schmalbandes unter einem Schrägungswinkel α zwischen 30° und 75° angeordnet werden. Hierdurch wird einerseits ein hinreichender Schrägungswinkel α erreicht, um die Minderung der Festigkeit aufgrund der Wärmeeinflusszone zu begrenzen. Andererseits ist die Herstellung der zu verschweißenden Stirnflächen bei diesen Schrägungswinkeln α noch unproblematisch etwa durch Sägen, Trennen oder dgl. einfachen Herstellungsverfahren möglich und damit einfach und präzise im Hinblick auf einen gleichbleibenden Schweißspalt möglich.

In weiterer Ausgestaltung können die schrägen Enden der zu verschweißenden Abschnitte des Schmalbandes bezogen auf die Flachseite des Schmalbandes relativ zur Hauptbelastungsrichtung des Schmalbandes unter einem Schrägungswinkel zwischen 30° und 75° angeordnet werden. Dabei wird das Schmalband in seiner ebenen Erstreckung quer zur Hauptbelastungsrichtung des Schmalbandes abgeschrägt ausgebildet, da hierdurch die Breite der Wärmeeinflusszone aufgrund der Schweißnaht quer zur Hauptbelastungsrichtung deutlich reduziert wird und damit der Einfluss der Wärmeeinflusszone auf die Gesamtfestigkeit des verschweißten Schmalbandes sich verringert.

In weiterer Ausgestaltung ist es denkbar, dass an die zu verschweißenden Enden des Schmalbandes jeweils zueinander passende, vorzugsweise planparallele, zur Hauptbelastungsrichtung des Schmalbandes abgeschrägt ausgebildete Flächen angearbeitet werden. Derartige abgeschrägt ausgebildete Flächen lassen sich herstellungstechnisch einfach durch Sägen, Trennen, Schleifen oder dgl. einfache Bearbeitungsverfahren schnell und genau herstellen und erlauben damit eine in Bezug auf die Gleichmäßigkeit der Schweißfuge vorteilhafte und kostengünstige Schweißnahtvorbereitung.

Insbesondere, wenn als Schweißverfahren ein Widerstandsstumpfschweißen eingesetzt wird, ist eine Ausführung des Widerstandsstumpfschweißens mit einer geringen Schweißstromstärke denkbar, bei der eine deutliche Verringerung der Einbringung von Wärme in die Schweißnaht und damit eine Verringerung der Wärmeeinflusszone in das verschweißte Schmalband möglich wird.

Von besonderem Vorteil ist es, wenn die erreichbare Festigkeit der Schweißverbindung des verschweißten Schmalbandes 65% - 90% der Ausgangsfestigkeit des kaltverfestigten Schmalbandes vor dem Verschweißen erreicht. Damit stellt eine erfindungsgemäß hergestellte Schweißnaht eine wesentlich geringere Schwächung der Gefügeeigenschaften des kaltverfestigten TWIP-Stahles dar als eine herkömmlich vorgenommene Verschweißung, so dass das verschweißte Schmalband besonders für die überwiegend einachsige Belastung als Armierungsmaterial in flexiblen Rohren die Vorteile der Kaltverfestigung der TWIP-Stähle weitgehend vollständig ausnutzen kann.

Die Erfindung hinsichtlich eines flexiblen Rohres aus kaltgewalztem Schmalband geht aus von einem flexiblem Rohr aus kaltgewalztem Schmalband in Form von Flachdraht oder Profilen aus einem TWIP-Stahl, insbesondere für Offshore-Anwendungen, bei dem die zu verschweißenden Schmalbänder jeweils zueinander passende, zur Hauptbelastungsrichtung des Schmalbandes abgeschrägt ausgebildete Enden aufweisen. Die Eigenschaften und Vorteile des erfindungsgemäßen Schmalbandes sind schon vorstehend in Bezug auf das erfindungsgemäße Verfahren beschrieben worden, worauf hier vollumfänglich Bezug genommen wird.

In einer ersten Ausgestaltung können die abgeschrägt ausgebildeten Enden der zu verschweißenden Schmalbänder planparallele Stirnflächen aufweisen, aber es ist auch möglich, dass die abgeschrägt ausgebildeten Enden der zu verschweißenden Schmalbänder zueinander passend profilierte Stirnflächen aufweisen. Planparallele oder zueinander passend profilierte Stirnflächen erlauben eine entsprechende Ausgestaltung der Schweißfuge und damit der Ausbildung der Wärmeeinflusszone.

Weiterhin ist eine Verwendung eines flexiblen Rohres gemäß Anspruch 17 für ein flexibles Rohr für die Erdöl- und Erdgasförderung sowie zum Transport von Flüssiggas (FLNG) mit Sauergas-Bedingungen (saure Angriffsmedien), aufweisend einen inneren schlauchartigen Fluidleiter sowie mindestens eine Lage schraubenförmig in dem Fluidleiter angeordneter oder auf oder über den Fluidleiter gewickelter Armierungsbänder aus dem flexiblen Rohr mit profiliertem Querschnitt gemäß Anspruch 9.

Eine besonders bevorzugte Ausführungsform eines flexiblen Rohrs unter Verwendung der erfindungsgemäßen Schmalbänder zeigt die Zeichnung.

Es zeigt:
- Figur 1: - einen schichtweisen Aufbau eines flexiblen Rohrs 1 unter Verwendung der erfindungsgemäßen Drähte/Schmalbänder 5, 6 zum Einsatz in der Erdöl- und Erdgasförderung sowie zum Transport von Flüssiggas (FLNG) mit Sauergas-Bedingungen (saure Angriffsmedien),
- Figur 2: - eine räumliche Ansicht des Stoßbereichs zweier Abschnitte des erfindungsgemäßen Schmalbandes 5, 6 mit schematischer Andeutung unterschiedlicher Schrägungswinkel α des Stoßbereichs der schräg ausgebildeten Stirnflächen 7,
- Figur 3: - Proben des erfindungsgemäß hergestellten Schmalbandes mit unterschiedlich abgeschrägten Stirnbereichen zu verbindender Abschnitte des Schmalbandes,
- Figur 4: - eine Draufsicht auf eine Schweißnaht mit einem Schrägungswinkel α=0° sowie zwei Ansichten der gerissenen Schweißnaht nach Durchführung eines Zugversuchs,
- Figur 5: - eine Draufsicht auf eine Schweißnaht mit einem Schrägungswinkel α=30° sowie zwei Ansichten der gerissenen Schweißnaht nach Durchführung eines Zugversuchs,
- Figur 6: - eine Draufsicht auf eine Schweißnaht mit einem Schrägungswinkel α=45° sowie zwei Ansichten der gerissenen Schweißnaht nach Durchführung eines Zugversuchs,
- Figur 7: - eine Draufsicht auf eine Schweißnaht mit einem Schrägungswinkel α=60° sowie zwei Ansichten der gerissenen Schweißnaht nach Durchführung eines Zugversuchs.

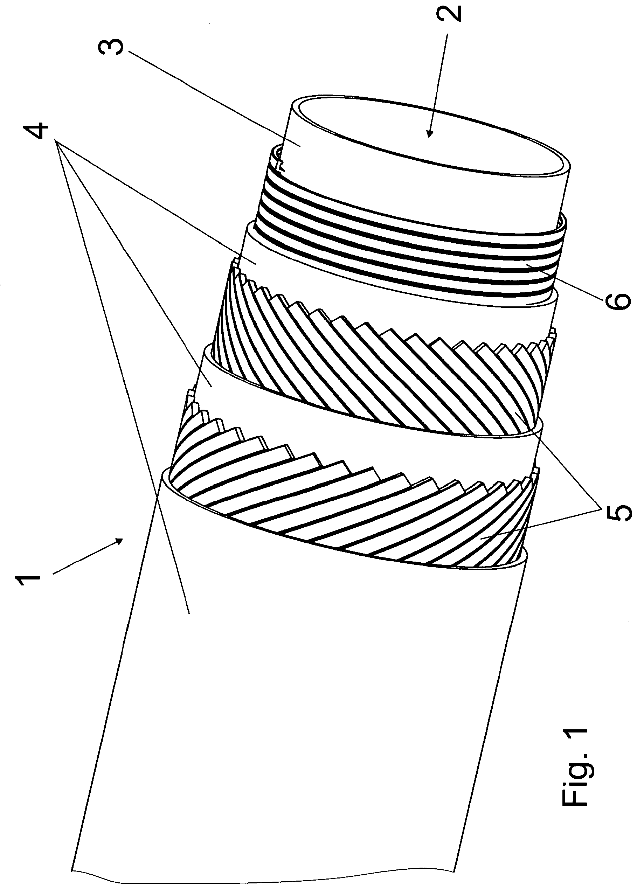

Ein flexibles Rohr 1 gemäß Figur 1, das unter Verwendung der erfindungsgemäßen Schmalbänder 5, 6 hergestellt ist, besteht aus einem inneren schlauchförmigen Innenrohr 3, das eine längserstreckte Öffnung 2 für die Leitung von Fluiden wie Flüssigkeiten oder Gasen aufweist. Das schlauchförmige Innenrohr 3 besteht üblicherweise aus einem polymeren Material und dichtet die längserstreckte Öffnung 2 und damit das zu leitende Fluid gegenüber der Umgebung ab.

Umgeben wird das schlauchförmige Innenrohr 3 von mehreren Lagen aus Polymeren sowie mindestens zwei Lagen Schmalband 5 und einer (oder auch mehrerer Lagen) eines ebenfalls aus derartigem Schmalband 5 hergestellten, aber mit profiliertem Querschnitt ausgebildeten Formschlussprofils 6. Hierbei wird das Formschlussprofil 6 wie hier dargestellt unmittelbar auf dem Innenrohr 3 schraubenförmig unter einem kleinen Schrägungswinkel aufgewickelt. Das Formschlussprofil 6 weist dabei einen derartigen Querschnitt auf, dass sich aufgrund der schraubenförmigen Wicklung benachbart zu liegen kommende Windungen des gleichen oder eines oder mehrerer weiterer Formschlussprofile 6 formschlüssig entlang ihrer Kanten miteinander verhaken können und damit einen wesentlich stabileren Verbund bilden, als wenn die Formschlussprofile 6 nur einfach nebeneinander liegend gewickelt werden. Hierdurch tragen die gewickelten Formschlussprofile 6 deutlich zu den Festigkeitseigenschaften des flexiblen Rohrs 1 bei.

Oberhalb der Lage des Formschlussprofils 6 sind, jeweils getrennt von der Lage des Formschlussprofils 6 und weiteren Lagen 4 aus Polymermaterial, hier zwei Lagen aus Schmalband 5 angeordnet, wobei das diese Lage bildende Schmalband 5 (oder auch nebeneinander liegend gewickelt mehrere Schmalbänder 5) sich an den Kanten berührend, aber nicht miteinander verbunden angeordnet sind. Auch ist das diese Lage bildende Schmalband 5 unter einem deutlich größeren Schrägungswinkel aufgewickelt.

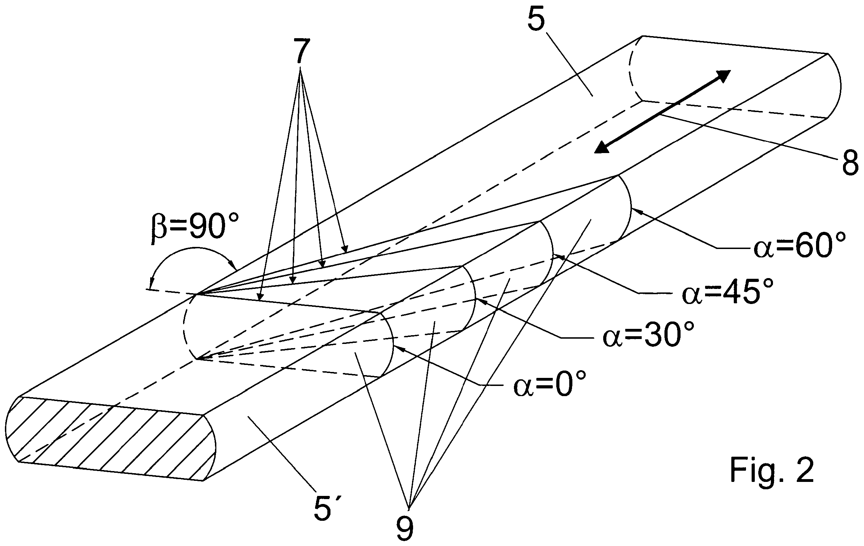

In der Figur 2 ist in einem Ausbruch ein Stoßbereich zwischen zwei Abschnitten zu verschweißender Schmalbänder 5, 5' zu erkennen, bei dem die unterschiedlichen Schrägungswinkel α der Stirnflächen 7 der Schmalbänder 5, 5' schematisch angedeutet sind. Hierbei ist der bekannte senkrechte Stoß mit 0° Schrägungswinkel sowie drei weitere denkbare Schrägungswinkel α von 30°, 45° und 60° beispielhaft angedeutet. Die Schrägstellung der Stirnflächen 7 ist nur in einer Richtung, nämlich quer zur Ebene der Flachseite des Schmalbandes 5, 5' vorgenommen, die Stirnflächen 7 stehen in der anderen Querrichtung unter einem Winkel von β gleich 90°. Denkbar ist aber auch eine zweite Schrägungsrichtung der Stirnflächen 7 mit einem Winkel β ungleich 90°.

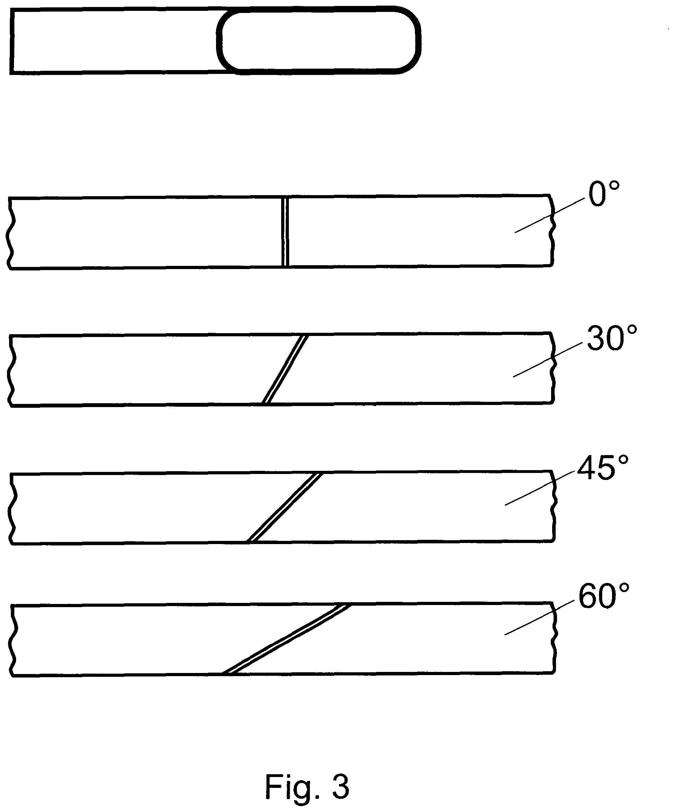

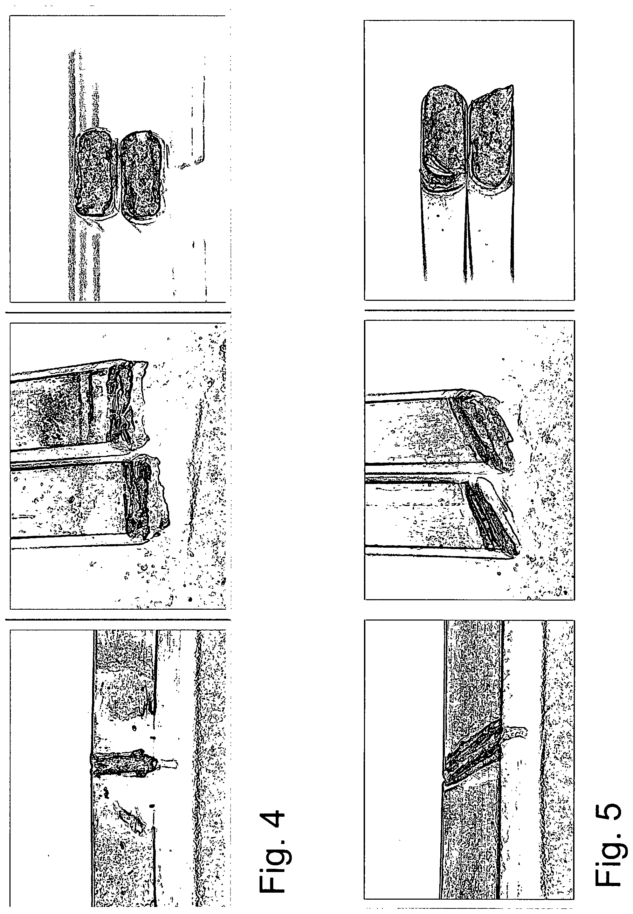

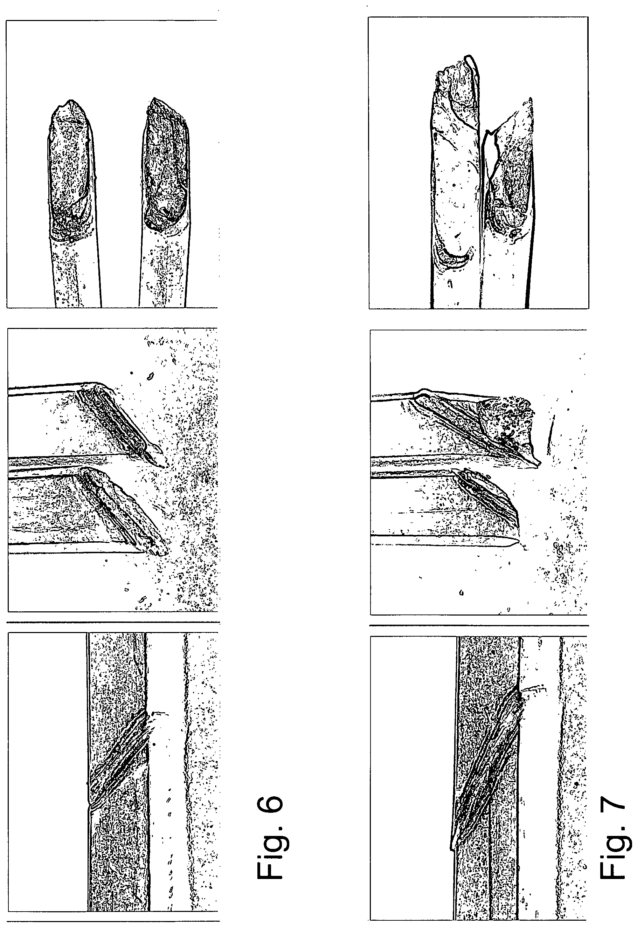

Die Figuren 3 bis 7 zeigen noch einmal Proben der gemäß Figur 2 beispielhaft angegebenen Schrägungswinkel α von 0°, 30°, 45° und 60° an realen Schmalbändern 5, die zum Zwecke der Untersuchung des Festigkeitsverhaltens der Schweißnähte 7 realer Schmalbänder 5 angefertigt wurden. In der Figur 3 sind die verschiedenen Schrägungswinkel α der Figur 2 noch einmal untereinander an planparallelen Stirnflächen 7 der Schmalbänder 5 vor dem Verschweißen zu erkennen. Die Figuren 4 bis 7 zeigen jeweils die unter verschiedenen Winkeln α verschweißten Schmalbänder 5 links im verschweißten Zustand und in der Mitte und rechts in zwei verschiedenen Ansichten nach der Durchführung einer Materialprüfung in Form eines Zugversuchs. Hieran erkennt man das Bruchbild im Bereich der Schweißnaht 9. Die Figur 4 zeigt eine Probe mit einem Schrägungswinkel α von 0°, Figur 5 eine Probe mit einem Schrägungswinkel α von 30°, Figur 6 eine Probe mit einem Schrägungswinkel α von 45° und Figur 7 eine Probe mit einem Schrägungswinkel α von 60°. Die zugehörigen Materialwerte sind in den nachfolgenden Tabellen unter Probe 0°, Probe 30°, Probe 45°, Probe 60° bezeichnet.

Als Material für die Herstellung der Schmalbänder 5 sowie der Durchführung der Materialprüfung wurde ein TWIP-Stahl gemäß der Zusammensetzung nach Tabelle 1 verwendet:

**Tabelle 1: Chemische Zusammensetzung des TWIP- Stahls**

| C % | Si (%) | Mn (%) | P (%) | S (%) | Cr (%) | Ni (%) | Al (%) |
|---|---|---|---|---|---|---|---|
| 0,41 | 0,43 | 19,00 | 0,015 | 0,001 | 2,11 | 0,12 | 1,19 |

In umfangreichen Versuchsreihen wurde ein derartiger hochverfestigter TWIP-Stahl (Draht mehrstufig flachgewalzt auf den Querschnitt 10 x 5 mm) gemäß Tabelle 1 mit einem Laser geschweißt und anschließend die mechanischen Werte im Bereich der Schweißnaht 9 im Zugversuch ermittelt. Der verwendete TWIP-Stahl wies dabei folgende mechanischen Werte nach der Kaltverformung, aber vor dem Verschweißen auf:

**Tabelle 2: Mechanische Werte des hochverfestigten TWIP-Stahls**

| S₀ [mm2] | E [GPa] | Rₘ [MPa] | Rp_{0,2} [MPa] | A₅₀ [%] | Rp_{0,2}/Rₘ [%] |
|---|---|---|---|---|---|
| 46,53 | 194 | 1558 | 1099 | 6,0 | 70,5 |

Nach dem Anbringen der unterschiedlich geschrägten Stirnflächen 7 gemäß Figuren 2 und 3 und dem anschließenden Laserschweißen wurden dann die in Tabelle 3 angegebenen mechanischen Werte des TWIP-Stahls im Bereich der Schweißnaht 9 gemessen bzw. ermittelt:

**Tabelle 3 : Mechanische Werte der Laser-Schweißproben 0°/30°/45°/60°**

| Probe | S₀ [mm²] | Rₘ [MPa] | A₅₀ [%] |
|---|---|---|---|
| 0° | 46,53 | 889 | 1,6 |
| 30° | 46,53 | 933 | 1,7 |
| 45° | 46,53 | 1157 | 2,8 |
| 60° | 46,53 | 1347 | 4,2 |

Mit dem erfindungsgemäßen Verfahren kann der Abfall der Zugfestigkeit im Bereich der jeweils unterschiedlich abgeschrägt angeordneten Schweißnaht 9 auf ein Niveau von 60-90 % der Basisfestigkeit des kaltverfestigten TWIP-Stahles angehoben werden. Ebenso steigt die Bruchdehnung in der Schweißnaht 9 deutlich an, d.h. die Duktilität wird verbessert, wie dies aus der Tabelle 4 zu entnehmen ist.

**Tabelle 4: Vergleich Zugfestigkeit Rₘ und Bruchdehnung A₅₀-Schweißnaht/ Basismaterial**

| Probe | Schweiß naht SN-Rₘ [MPa] | Schweiß naht SN-A₅₀ [%] | Basis material B-Rₘ [MPa] | Basis material B-A₅₀ [%] | SN- Rₘ/ B-Rₘ [%] | SN-A50/ B-Rₘ [%] |
|---|---|---|---|---|---|---|
| 0° | 889 | 1,6 | 1558 | 6,0 | 57 | 27 |
| 30° | 933 | 1,7 | 1558 | 6,0 | 60 | 28 |
| 45° | 1157 | 2,8 | 1558 | 6,0 | 74 | 47 |
| 60° | 1347 | 4,2 | 1558 | 6,0 | 86 | 70 |

Bei den Proben mit angeschrägter Nahtvorbereitung der Schweißnaht 9 mit einem Winkel α von 45° und 60° ist ein deutlicher Anstieg der Zugfestigkeit und der Bruchdehnung zu erkennen. Auch über 60° hinaus ist ein weiterer Anstieg zu erwarten wobei die Nahtvorbereitung aufwendiger und die Schweißnaht 9 länger wird.

### Sachnummernliste

- 1 -: flexibles Rohr
- 2 -: längserstreckte Öffnung
- 3 -: schlauchförmiges Innenrohr
- 4 -: Lagen aus Polymeren
- 5 -: Schmalband
- 6 -: Formschlussprofil
- 7 -: schräg angearbeitete Stirnflächen
- 8 -: Hauptbelastungsrichtung
- 9 -: Schweißnaht

## Patentansprüche

1. Verfahren zur Herstellung flexibler Rohre mittels Verschweißen kaltgewalzter Schmalbänder (5) in Form von Flachdraht oder drahtähnlichen Profilen aus einem TWIP-Stahl, insbesondere von flexiblen Rohren (1) für Offshore-Anwendungen,
**dadurch gekennzeichnet, dass**
die Enden (7) der zu verschweißenden Abschnitte des Schmalbandes (5) relativ zur Hauptbelastungsrichtung (8) des Schmalbandes (5) abgeschrägt ausgebildet und zueinander passend angeordnet werden und die Schweißnaht (9) durch ein Schmelzschweißverfahren mit einer relativ kleinen Aufschmelzzone und/oder einer relativ geringen Schweißtemperatur ausgeführt wird, wobei die Lage der Schweißnaht (9) relativ zur Hauptbelastungsrichtung (8) des Schmalbandes (5) unter einem Schrägungswinkel α zwischen 30° und 75° angeordnet werden.

2. Verfahren gemäß Anspruch 1, **dadurch gekennzeichnet, dass** die schrägen Enden (7) der zu verschweißenden Abschnitte des Schmalbandes (5) bezogen auf die Flachseite des Schmalbandes (5) relativ zur Hauptbelastungsrichtung (8) des Schmalbandes (5) unter einem Schrägungswinkel α zwischen 30° und 75° angeordnet wird.

3. Verfahren gemäß einem der vorstehenden Ansprüche, **dadurch gekennzeichnet, dass** an die zu verschweißenden Enden (7) des Schmalbandes (5) jeweils zueinander passende, vorzugsweise planparallele, zur Hauptbelastungsrichtung (8) des Schmalbandes (5) abgeschrägt ausgebildete Flächen (7) angearbeitet werden.

4. Verfahren gemäß Anspruch 3, **dadurch gekennzeichnet, dass** die jeweils zueinander passenden Flächen (7) unter einem Schrägungswinkel α zwischen 30° und 75° relativ zur Hauptbelastungsrichtung (8) des Schmalbandes (5) angeordnet werden.

5. Verfahren gemäß einem der vorstehenden Ansprüche, **dadurch gekennzeichnet, dass** als Schweißverfahren ein Laserschweißen eingesetzt wird.

6. Verfahren gemäß einem der Ansprüche 1 bis 4, **dadurch gekennzeichnet, dass** als Schweißverfahren ein Widerstandsstumpfschweißen eingesetzt wird.

7. Verfahren gemäß Anspruch 6, **dadurch gekennzeichnet, dass** das Widerstandsstumpfschweißen mit einer geringen Schweißstromstärke durchgeführt wird.

8. Verfahren gemäß einem der vorstehenden Ansprüche, **dadurch gekennzeichnet, dass** die erreichbare Festigkeit der Schweißverbindung (9) des verschweißten Schmalbandes (5) 65% - 90% der Ausgangsfestigkeit des kaltverfestigten Schmalbandes (5) vor dem Verschweißen erreicht.

9. Flexibles Rohr aus kaltgewalztem Schmalband (5) in Form von Flachdraht oder drahtähnlichen Profilen aus einem TWIP-Stahl für den Einsatz insbesondere für Offshore-Anwendungen,
**dadurch gekennzeichnet, dass**
das kaltgewalzte Schmalband (5) aus mindestens zwei jeweils zu verschweißenden Schmalbändern (5) gebildet ist, die jeweils zueinander passende, zur Hauptbelastungsrichtung (8) des Schmalbandes (5) abgeschrägt ausgebildete Enden (7) aufweisen, wobei die Lage der Schweißnaht (9) relativ zur Hauptbelastungsrichtung (8) des Schmalbandes (5) unter einem Schrägungswinkel α zwischen 30° und 75° angeordnet ist.

10. Flexibles Rohr gemäß Anspruch 9, **dadurch gekennzeichnet, dass** die schrägen Enden (7) der zu verschweißenden Abschnitte des Schmalbandes (5) relativ zur Hauptbelastungsrichtung (8) des Schmalbandes (5) unter einem Schrägungswinkel α zwischen 30° und 75° angeordnet sind.

11. Flexibles Rohr gemäß einem der Ansprüche 9 oder 10, **dadurch gekennzeichnet, dass** die schrägen Stirnflächen (7) der zu verschweißenden Abschnitte des Schmalbandes (5) in der Ebene der Flachseite des Schmalbandes (5) abgeschrägt ausgebildet sind.

12. Flexibles Rohr gemäß einem der Ansprüche 9 bis 11, **dadurch gekennzeichnet, dass** die abgeschrägt ausgebildeten Enden (7) der zu verschweißenden Schmalbänder (5) planparallele Stirnflächen (7) aufweisen.

13. Flexibles Rohr gemäß einem der Ansprüche 9 bis 11, **dadurch gekennzeichnet, dass** die abgeschrägt ausgebildeten Enden (7) der zu verschweißenden Schmalbänder (5) zueinander passend profilierte Stirnflächen (7) aufweisen.

14. Flexibles Rohr gemäß einem der Ansprüche 9 bis 13, **dadurch gekennzeichnet, dass** die Schweißverbindung (9) mit einem Laserschweißen hergestellt ist.

15. Flexibles Rohr gemäß einem der Ansprüche 9 bis 13, **dadurch gekennzeichnet, dass** die Schweißverbindung (9) mit einem Widerstandsstumpfschweißen hergestellt ist.

16. Flexibles Rohr gemäß einem der Ansprüche 9 bis 15, **dadurch gekennzeichnet, dass** die erreichbare Festigkeit der Schweißverbindung (9) des verschweißten Schmalbandes (5) 65% - 90% der Ausgangsfestigkeit des kaltverfestigten Schmalbandes (5) vor dem Verschweißen beträgt.

17. Verwendung des flexiblen Rohrs, hergestellt gemäß Anspruch 1, für ein flexibles Rohr (1) für die Erdöl- und Erdgasförderung sowie zum Transport von Flüssiggas (FLNG) mit Sauergas-Bedingungen (saure Angriffsmedien), aufweisend einen inneren schlauchartigen Fluidleiter (3) sowie mindestens eine Lage schraubenförmig in dem Fluidleiter angeordneter oder auf oder über den Fluidleiter gewickelter Armierungsbänder (5, 6) aus dem flexiblen Rohr gemäß Anspruch 9.

## Claims

1. Method for manufacturing flexible pipes by welding cold-rolled narrow strips (5) in the form of flat wire or wire-like sections of a TWIP steel, in particular for use in flexible pipes (1) for offshore applications,
**characterized in that**
the ends (7) of the sections of the narrow strip (5) to be welded are chamfered relative to the main loading direction (8) of the narrow strip (5) and are arranged to match one another, and the weld seam (9) is produced by a fusion welding process with a relatively small fusion zone and/or a relatively low welding temperature, the position of the weld seam (9) relative to the main loading direction (8) of the narrow strip (5) being arranged at a bevel angle α of between 30° and 75°.

2. Method according to claim 1, **characterized in that** the oblique ends (7) of the sections of the narrow strip (5) to be welded are arranged relative to the flat side of the narrow strip (5) at an oblique angle α of between 30° and 75° with respect to the main loading direction (8) of the narrow strip (5).

3. Method according to one of the preceding claims, **characterized in that** surfaces (7) which match each other, are preferably plane-parallel and are beveled relative to the main loading direction (8) of the narrow strip (5), are worked onto the ends (7) of the narrow strip (5) to be welded.

4. Method according to claim 3, **characterized in that** the respective matching surfaces (7) are arranged at an oblique angle α of between 30° and 75° relative to the main loading direction (8) of the narrow strip (5).

5. Method according to one of the preceding claims, **characterized in that** laser welding is used as welding method.

6. Method according to one of the claims 1 to 4, **characterized in that** resistance butt welding is used as the welding method.

7. Method according to claim 6, **characterized in that** the resistance butt welding is carried out with a low welding current intensity.

8. Method according to one of the preceding claims, **characterized in that** the achievable strength of the welded joint (9) of the welded narrow strip (5) reaches 65% - 90% of the initial strength of the cold-strengthened narrow strip (5) before welding.

9. Flexible pipe made of cold-rolled narrow strip (5) in the form of flat wire or wire-like sections made of a TWIP steel for the use in particular for offshore applications,
**characterized in that**
the cold-rolled narrow strip (5) is formed from at least two respective narrow strips (5) which are to be welded and which each have ends (7) which match one another and are chamfered with respect to the main loading direction (8) of the narrow strip (5), the position of the weld seam (9) relative to the main loading direction (8) of the narrow strip (5) being arranged at a bevel angle α of between 30° and 75°.

10. Flexible pipe according to claim 9, **characterized in that** the oblique ends (7) of the sections of the narrow strip (5) to be welded are arranged relative to the main loading direction (8) of the narrow strip (5) at an inclination angle α of between 30° and 75°.

11. Flexible pipe according to one of claims 9 or 10, **characterized in that** the oblique end faces (7) of the sections of the narrow strip (5) to be welded are beveled in the plane of the flat side of the narrow strip (5).

12. Flexible pipe according to one of claims 9 to 11, **characterized in that** the oblique ends (7) of the narrow strips (5) to be welded have plane-parallel end faces (7).

13. Flexible pipe according to one of claims 9 to 11, **characterized in that** the oblique ends (7) of the narrow strips (5) to be welded have end faces (7) profiled to match one another.

14. Flexible pipe according to one of the claims 9 to 13, **characterized in that** the welded joint (9) is produced by laser welding.

15. Flexible pipe according to any one of claims 9 to 13, **characterized in that** the welded joint (9) is produced by resistance butt welding.

16. Flexible pipe according to any one of claims 9 to 15, **characterized in that** the achievable strength of the welded joint (9) of the welded narrow strip (5) is 65% - 90% of the initial strength of the cold-strengthened narrow strip (5) before welding.

17. Use of the flexible pipe manufactured according to claim 1 for a flexible pipe (1) for oil and gas production and for transporting liquid natural gas (FLNG) with sour gas conditions (acidic attack media), comprising an inner hose-like fluid conductor (3) and at least one layer of helically arranged reinforcement strips (5, 6) of the flexible pipe according to claim 9 in the fluid conductor or wound on or over the fluid conductor.

## Revendications

1. Procédé de fabrication de tubes flexibles par soudage de bandes étroites (5) laminées à froid sous la forme d'un fil plat ou de profils similaires au fil en un acier TWIP, en particulier de tubes flexibles (1) pour des applications offshore,
**caractérisé en ce que**
les extrémités (7) des sections à souder de la bande étroite (5) sont réalisées biseautées par rapport au sens de sollicitation principale (8) de la bande étroite (5) et sont agencées de manière adaptée l'une à l'autre et le cordon de soudure (9) est réalisé par un procédé de soudage par fusion avec une zone de fusion relativement petite et/ou une température de soudage relativement faible, dans lequel la position du cordon de soudure (9) est agencée par rapport au sens de sollicitation principale (8) de la bande étroite (5) selon un angle d'hélice α entre 30° et 75°.

2. Procédé selon la revendication 1, **caractérisé en ce que** les extrémités biseautées (7) des sections à souder de la bande étroite (5) se référant au côté plat de la bande étroite (5) sont agencées par rapport au sens de sollicitation principale (8) de la bande étroite (5) selon un angle d'hélice α entre 30° et 75°.

3. Procédé selon l'une quelconque des revendications précédentes, **caractérisé en ce que** des surfaces (7) réalisées biseautées par rapport au sens de sollicitation principale (8) de la bande étroite (5), de préférence parallélépipédiques, adaptées respectivement les unes aux autres sont usinées aux extrémités (7) à souder de la bande étroite (5).

4. Procédé selon la revendication 3, **caractérisé en ce que** les surfaces (7) adaptées respectivement les unes aux autres sont agencées selon un angle d'hélice α entre 30° et 75° par rapport au sens de sollicitation principale (8) de la bande étroite (5).

5. Procédé selon l'une quelconque des revendications précédentes, **caractérisé en ce qu'**un soudage au laser est utilisé comme procédé de soudage.

6. Procédé selon l'une quelconque des revendications 1 à 4, **caractérisé en ce qu'**un soudage en bout par résistance est utilisé comme procédé de soudage.

7. Procédé selon la revendication 6, **caractérisé en ce que** le soudage en bout par résistance est réalisé avec une intensité de courant de soudage faible.

8. Procédé selon l'une quelconque des revendications précédentes, **caractérisé en ce que** la résistance atteignable de la liaison soudée (9) de la bande étroite (5) soudée atteint 65 % à 90 % de la résistance de départ de la bande étroite (5) consolidée à froid avant le soudage.

9. Tube flexible composé d'une bande étroite (5) laminée à froid sous la forme d'un fil plat ou de profils similaires au fil en un acier TWIP pour l'utilisation en particulier pour des applications offshore,
**caractérisé en ce que**
la bande étroite (5) laminée à froid est formée en au moins deux bandes étroites (5) à souder respectivement qui présentent des extrémités (7) réalisées biseautées au sens de sollicitation principale (8) de la bande étroite (5), adaptées respectivement les unes aux autres, dans lequel la position du cordon de soudure (9) par rapport au sens de sollicitation principale (8) de la bande étroite (5) est agencée selon un angle d'hélice α entre 30° et 75°.

10. Tube flexible selon la revendication 9, **caractérisé en ce que** les extrémités biseautées (7) des sections à souder de la bande étroite (5) sont agencées par rapport au sens de sollicitation principale (8) de la bande étroite (5) selon un angle d'hélice α entre 30° et 75°.

11. Tube flexible selon l'une quelconque des revendications 9 ou 10, **caractérisé en ce que** les surfaces avant (7) biseautées des sections à souder de la bande étroite (5) sont réalisées biseautées dans le plan du côté plat de la bande étroite (5).

12. Tube flexible selon l'une quelconque des revendications 9 à 11, **caractérisé en ce que** les extrémités (7) réalisées biseautées des bandes étroites (5) à souder présentent des surfaces avant (7) parallélépipédiques.

13. Tube flexible selon l'une quelconque des revendications 9 à 11, **caractérisé en ce que** les extrémités (7) réalisées biseautées des bandes étroites (5) à souder présentent des surfaces avant (7) profilées de manière adaptée les unes aux autres.

14. Tube flexible selon l'une quelconque des revendications 9 à 13, **caractérisé en ce que** la liaison soudée (9) est fabriquée avec un soudage au laser.

15. Tube flexible selon l'une quelconque des revendications 9 à 13, **caractérisé en ce que** la liaison soudée (9) est fabriquée avec un soudage en bout par résistance.

16. Tube flexible selon l'une quelconque des revendications 9 à 15, **caractérisé en ce que** la résistance atteignable de la liaison soudée (9) de la bande étroite (5) soudée est comprise entre 65 % et 90 % de la résistance de départ de la bande étroite (5) consolidée à froid avant le soudage.

17. Utilisation du tube flexible, fabriqué selon la revendication 1, pour un tube flexible (1) pour le transport de pétrole et de gaz naturel ainsi que pour le transport de gaz liquide (FLNG) avec des conditions de gaz acide (milieux d'attaque acides), présentant un conducteur de fluide (3) de type tuyau intérieur ainsi qu'au moins une couche de bandes d'armature (5, 6) agencées en forme d'hélice dans le conducteur de fluide, enroulées sur ou au-dessus du conducteur de fluide formées du tube flexible selon la revendication 9.
